# EUROPEAN PATENT APPLICATION

(11) **EP 1 063 854 A1**
(43) Date of publication of application: **27.12.2000**
(21) Application number: 99401556.8
(22) Date of filing: 22.06.1999
(51) Int. Cl.: H04Q 3/00, H04L 29/06

(54) **Method for adding a new service to a user terminal connected to a network node**

(71) Applicant: ALCATEL, 75008 Paris (FR)
(72) Inventor: Chantrain, Dominique Helena Lucia, 2650 Edegem (BE)
(74) Representative: Narmon, Gisèle Marie Thérèse

(57) **Abstract**

The invention relates to a method for adding a new service to a user terminal (1) connected to a network node which preferably is a Network Access Server (12) of an internet protocol network. The service is available from a service controller or Application Server (13) also connected to the network access server. The method comprises the steps of:
- interconnecting the user terminal (1) and the application server (13) transparently through the network access server (12);
- downloading instructions, for activating the new service, from the application server to the user terminal via the network access server; and
- using these instructions by the user terminal to control the network access server.

## Description

The invention relates to a method for adding a new service to a user terminal connected to a network node, said service being available from a service controller, for example an application server, also connected to said network node.

The network node, (also referred to as network access point, remote access node, network access server) only offers a very basic service functionality, such as establishing or deleting connections. This service functionality is activated by means of some signaling protocol from the user terminal, for example Point-to-Point Protocol (PPP) or Hyper Text Transfer Protocol (HTTP).

In intelligent networks, additional value added services, such as directory services, service selection menu's etc. are typically implemented in a separate 'Service Controller' or 'Service Control Point' (SCP). These services require a communication between this service control point and the 'Network Node', which is here called 'Service Switching Point' (SSP).

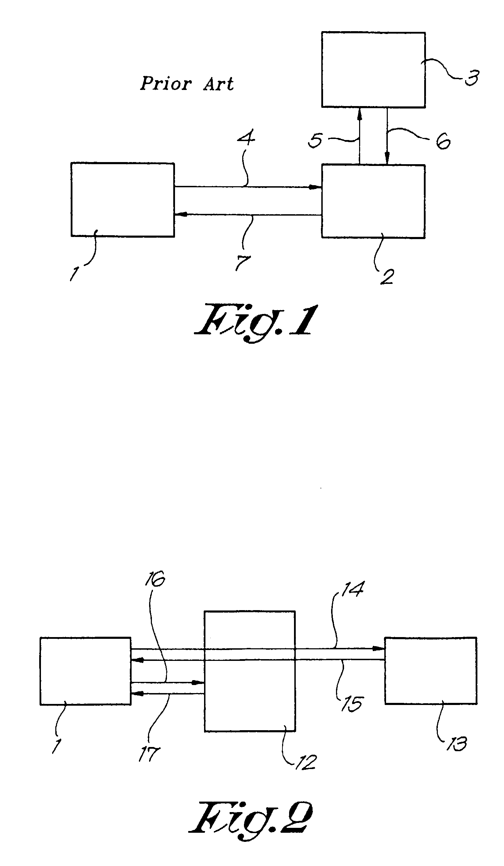

In the annexed Fig. 1 a user terminal 1, a service switching point 2 and a service control point 3 of a known intelligent network are schematically shown. In such intelligent network introduction of value added services is as follows:
- to initiate a call or a service, the user terminal 1 sends a message to the service switching point 2 as shown by arrow 4 in Fig. 1;
- the service switching point 2 detects that this message involves a special service which is controlled by the service control point 3 and transfers a message to the latter as indicated by arrow 5 in Fig. 1;
- the service control point 3 handles the request and, as shown by arrow 6, tells the service switching point 2 how the latter should set up a connection with the user terminal 1; and
- finally, the service switching point 2 sends a message back to the user terminal 1, telling the latter that the connection has been established, as shown by arrow 7 in Fig. 1.

Each application tends however to require a slightly different functionality from the communication or interface between the application server or service control point 3 and the network node or service switching point 2. As a result, the network node equipment needs to be updated each time a new application or service is introduced, for example when new connections are made, connection parameters are modified etcetera.

Therefore, the above method cannot be used to deploy new value added services on top of network node equipment that is already installed in the field and that does not support the required interface.

Other telecommunication environments such as Analog Display Service Interface (ADSI) and Wireless Telephony Application (WTA) rely on scripting to implement value added services. The user terminal first connects to a scripting server, from where a service script is downloaded. After that, the user terminal becomes an "Intelligent Terminal", and the connection to the scripting server is no longer required. When a user wants to activate a service, the script invokes commands from an Application Program Interface (API) on the user terminal to send messages to the network node.

Technologies such as ADSI also allow for interactive services, i.e. the API of the user terminal is activated from an application that is running on the scripting server.

The above mentioned environments such as ADSI and WTA require a specific application program interface on the user terminal and are thus limited to a given type of user terminals.

The invention seeks to provide a method for adding a new service to a user terminal connected to a network node, avoiding the above mentioned drawbacks and permitting the adding of new services without modifying the network node nor the user terminal and without the use of new interfaces.

In accordance with the invention, this object is accomplished by the fact that the method comprises the steps of:
- interconnecting said user terminal and said service controller transparently through said network node;
- downloading instructions from said service controller to said user terminal via said network node for activating said service; and
- using the instructions of the service controller by the user terminal to control said network node.

The network may be an internet protocol network, whereby the network node is a network access server and the service controller is an application server.

The invention will now be described by way of example and with reference to the accompanying Fig. 2 that shows a block diagram of the method in accordance with the invention.

Referring to an Internet Protocol (IP) network as shown at Fig. 2, the method according to the invention comprises the following steps:

In a first step, the user establishes a connection between the user terminal 1 and a Network Node, which in this case is more particularly a 'Network Access Server' 12, and automatically the terminal 1 is interconnected, transparently through this network access server 12, to a Service Controller, which in this case is an 'Application Server' 13.

Via this connection, indicated by arrow 14, the user has access to a set of service menu's, from which he can select a service. These service menu's are downloaded to the terminal 1 as shown by arrow 15. They include, for each service, corresponding instructions telling the user terminal 1 which command(s) it has to send to the network access server 12.

When the user selects a service in this menu, for instance "home banking", the terminal 1 will send the appropriated command(s) to the network access server 12. This command is conform to the basic protocol supported by the network access server 12, e.g. 'new connection', 'setup connection' or 'delete connection'.

The user terminal 1 sends said command to the network access server 12, as shown by arrow 16, which activates the requested service and confirms that the connection has been made, as shown by arrow 17.

The basic communication between the user terminal 1 and the network access server 12 may use HTTP protocol. In this case the implementation of the method according to the invention is very simple. However other communication protocols can be used. The application server 13 may for instance use applets or HTML scripts to activate these protocols.

From the point of view of the network node, the application server 13 is treated as a simple terminal, more specifically as the 'B' part of the communication. When the user terminal 1 sends the command for the service to the network access server 12, it is immediately connected to the application server 13.

This service, i.e. the immediate connection of a terminal to a default destination, is typically already supported in a network access server 12, such as for example from the known DANA™ ("direct connect") of the company ALCATEL™. No special interface between the network access server 12 and the application server 13 is required and no new functionality has to be introduced in the network access server 12.

Since no modification nor update is required to the existing network access server 12, new services can be introduced much more rapidly than by known methods. This is especially important in networks comprising an installed base of network nodes.

## Claims

1. A method for adding a new service to a user terminal (1) connected to a network node (2, 12), said service being available from a service controller (3, 13) also connected to said network node, characterized in that said method comprises the steps of:
interconnecting said user terminal (1) and said service controller (3, 13) transparently through said network node (2, 12);
downloading instructions from said service controller to said user terminal via said network node for activating said service; and
using the instructions of the service controller by the user terminal to control said network node.

2. Method according to claim 1, characterized in that the network is an internet protocol network, whereby the network node is a Network Access Server (12) while the service controller is an Application Server (13).

3. Method according to any of the claims 1 or 2, characterized in that the instructions downloaded from the service controller (3, 13) to the user terminal (1) contain at least one command which the user terminal (1) has to send to the network node (2, 12) for activating said service, said command being conform to the basic protocol supported by said network node, and controlling said network node comprises sending the command by said user terminal to said network node which activates said service and confirms to said user terminal that the connection has been made.
